# EUROPÄISCHE PATENTSCHRIFT

(11) **EP 1 528 164 B1**
(45) Veröffentlichungstag und Bekanntmachung des Hinweises auf die Patenterteilung: **17.01.2007**
(21) Anmeldenummer: 04450118.7
(22) Anmeldetag: 27.05.2004
(51) Int. Cl.: E02F 3/627, B62D 49/02

(54) **Vorrichtung zur lösbaren Kupplung eines Arbeitsgerätes, insbesondere einer Ladeschwinge, mit einem Tragfahrzeug**
Apparatus for detachably coupling an implement, especially a loading arm, to a vehicle
Appareil pour accoupler de manière amovible un outil de travail, en particulier un bras d'un engin, et un véhicule

(30) Priorität: 31.10.2003 AT 17322003
(43) Veröffentlichungstag der Anmeldung: 04.05.2005
(73) Patentinhaber: Hauer, Franz, 3125 Statzendorf (AT)
(72) Erfinder: Hauer, Franz, 3125 Statzendorf (AT)
(74) Vertreter: Atzwanger, Richard

(56) Entgegenhaltungen:
- EP-A- 1 365 073
- AT-B- 374 857
- DE-A- 3 630 976
- FR-A- 2 571 452
- US-A- 4 436 477

## Beschreibung

Die gegenständliche Erfindung betrifft ein Tragfahrzeug, insbesondere einen Traktor, mit einem ankuppelbaren Arbeitsgerät und mit einer Vorrichtung zur Kupplung des Arbeitsgerätes, insbesondere einer Ladeschwinge, mit dem Tragfahrzeug, wobei das Tragfahrzeug und das Arbeitsgerät mit einander zugeordneten Tragkonsolen ausgebildet sind, welche aneinander zur Anlage bringbar sind und wobei weiters an einer der Tragkonsolen des Arbeitsgerätes ein mittels eines Betätigungshebels verstellbares Riegelelement angeordnet ist, welchem an der entsprechenden Tragkonsole des Tragfahrzeuges mindestens ein Anschlag zugeordnet ist und durch welches die aneinander zur Anlage gebrachten Tragkonsolen des Arbeitsgerätes und des Tragfahrzeuges miteinander verriegelbar sind.

Aus der AT 374857 B 1 ist ein Tragfahrzeug bekannt, welches mit einem an diesem lösbar befestigten Zusatzgerät ausgebildet ist, wobei das Tragfahrzeug und das Zusatzgerät jeweils mit einander zugeordneten Tragkonsolen ausgebildet sind. Dabei erfolgt die Befestigung der Tragkonsolen des Zusatzgerätes an den Tragkonsolen des Tragfahrzeuges dadurch, dass in einander zugeordnete Bohrungen der Tragkonsolen ein mit einer exzentrischen Fläche ausgebildeter Verriegelungsbolzen eingesetzt wird, durch dessen Verdrehung die an den Tragkonsolen befindlichen Lagerflächen aneinander zur festen Anlage gebracht und die Tragkonsolen miteinander verriegelt werden.
Diese bekannte Einrichtung entspricht jedoch deshalb nicht den an sie gestellten Anforderungen, da vorerst die Tragkonsolen in die richtige Lage zueinander gebracht werden müssen, worauf der Exzenterbolzen eingesetzt und manuell verdreht werden kann.

Der gegenständlichen Erfindung liegt somit die Aufgabe zugrunde, eine Vorrichtung zu schaffen, durch welche eine automatische Kupplung und Verriegelung der Tragkonsolen des Arbeitsgerätes mit den Tragkonsolen des Tragfahrzeuges erfolgt, wobei eine manuelle Betätigung nur erforderlich ist, um das Arbeitsgerät vom Tragfahrzeug zu entriegeln. Dies wird erfindungsgemäß dadurch erzielt, dass der Betätigungshebel unter Wirkung einer Stellfeder steht, durch welche er auf Verstellung des Riegelelementes in seine das Arbeitsgerät mit dem Tragfahrzeug verriegelnde Stellung belastet wird und dass eine Rasteinrichtung vorgesehen ist, durch welche das Riegelelement nach Lösen der Verriegelung entgegen der Wirkung der Stellfeder in seiner entriegelnden Stellung gehalten wird, wobei die Wirkung der Rasteinrichtung dadurch aufgehoben wird, dass die Tragkonsolen des Arbeitsgerätes und des Tragfahrzeuges aneinander zur Anlage gebracht werden.

Vorzugsweise sind die Tragkonsolen des Arbeitsgerätes durch jeweils ein Paar von voneinander im Abstand befindlichen Platten gebildet. Nach einer bevorzugten Ausführungsform steht der Betätigungshebel unter Wirkung einer Stellfeder, durch welche er auf Verstellung des Riegelelementes in die verriegelnde Stellung belastet ist. Weiters ist vorzugsweise das Riegelelement längs der Tragkonsole des Arbeitsgerätes verstellbar geführt, wobei insbesondere die mindestens eine Tragkonsole des Arbeitsgerätes mit einem Bolzen od.dgl. ausgebildet ist, welcher einen im Riegelelement vorgesehenen Führungsschlitz durchsetzt. Weiters kann der Betätigungshebel mit einer einen Führungsschlitz aufweisenden Stellplatte ausgebildet sein, in welchem ein am Riegelelement befindlicher Bolzen od.dgl. geführt ist. Weiters können die Tragkonsolen des Tragfahrzeuges und des Arbeitsgerätes mit Anschlägen ausgebildet sein, mit welchen das Riegelelement zusammenwirkt.

Vorzugsweise ist am Riegelelement eine verschwenkbare Klinke vorgesehen, durch welche das Riegelelement in seiner entriegelnden Stellung gehalten werden kann. Dabei ist vorzugsweise der Klinke ein an der entsprechenden Tragkonsole des Arbeitsgerätes befindlicher Anschlag, z.B. ein Bolzen, zugeordnet. Weiters ist vorzugsweise an der mindestens einen Tragkonsole des Arbeitsgerätes ein Stellelement vorgesehen, welches einerseits mit der Klinke und andererseits mit der entsprechenden Tragkonsole des Tragfahrzeuges zusammenwirkt, wobei es durch die Tragkonsole des Tragfahrzeuges so verstellt wird, dass die Klinke vom Anschlag gelöst wird, wodurch das Riegelelement unter Wirkung der Stellfeder in seine verriegelnde Lage verstellbar ist.

Der Gegenstand der Erfindung ist nachstehend anhand eines in der Zeichnung dargestellten Ausführungsbeispieles näher erläutert. Es zeigen:
- Fig.1: ein Tragfahrzeug und ein Arbeitsgerät, in Seitenansicht;

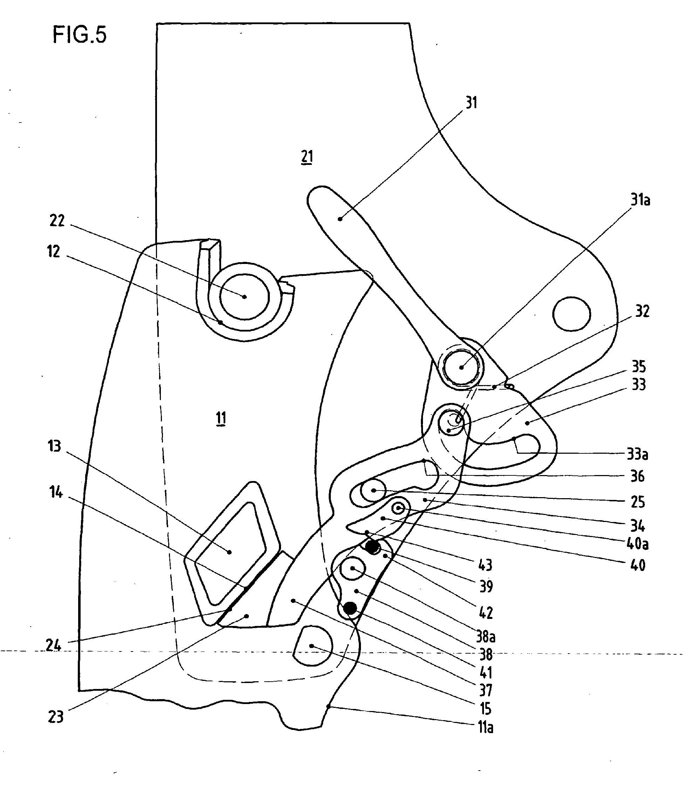

- Fig.2 bis 5: eine erfindungsgemäße Vorrichtung, in vier unterschiedlichen Betriebslagen, in Seitenansicht.

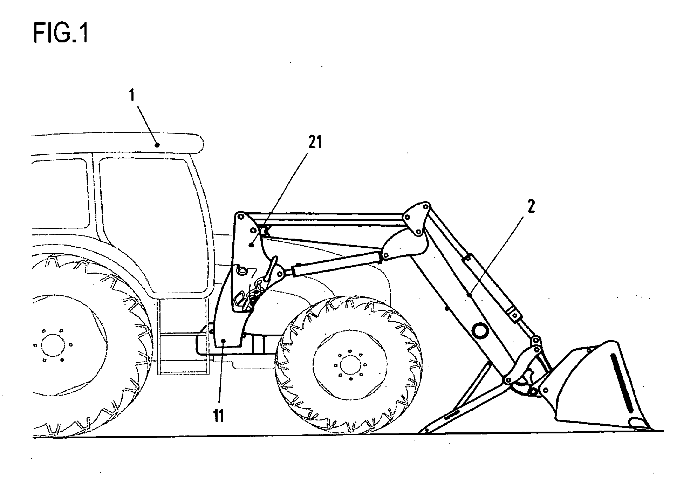

In Fig. 1 ist ein Traktor 1 dargestellt, an welchen ein Arbeitsgerät 2, insbesondere eine Ladeschwinge, angekuppelt und in der Betriebslage verriegelt ist. Hierfür ist der Traktor 1 mit zwei seitlich angeordneten Tragkonsolen 11 ausgebildet und ist das Arbeitsgerät 2 mit zwei den Tragkonsolen 11 des Traktors 1 zugeordneten Tragkonsolen 21 ausgebildet, wobei die Tragkonsolen 11 und 21 aneinander zur Anlage bringbar und in ihrer Betriebslage miteinander verriegelbar sind. Die einander zugeordneten Tragkonsolen sind jeweils durch am Arbeitsgerät 2 vorgesehene Plattenpaare und durch am Traktor 1 angeordnete einzelne Platten gebildet, wobei sich in der gekuppelten Stellung die Platten des Traktors 1 zwischen den Platten des Arbeitsgerätes 2 befinden. Jeder der beiden Tragkonsolen 11 und 21 ist eine Verriegelungseinrichtung zugeordnet.

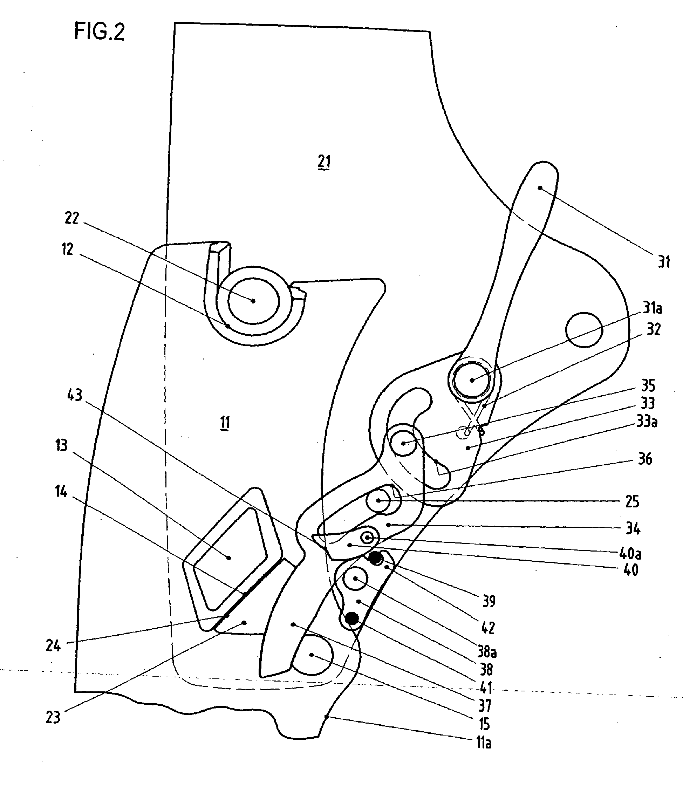

Wie dies aus Fig.2 ersichtlich ist, sind die Tragkonsolen 11 des Traktors 1 an ihren oberen Stirnenden mit einer halbkreisförmigen Ausnehmung 12 und weiters mit Anschlägen 13, durch welche Führungsflächen 14 gebildet sind, versehen. Die Tragkonsolen 21 des Arbeitsgerätes 2 sind mit einem den Ausnehmungen 12 zugeordneten Tragbolzen 22 und mit Anschlägen 23 ausgebildet, welche den Führungsflächen 14 zugeordnete Führungsflächen 24 bilden. Um das Arbeitsgerät 2 mit dem Traktor 1 zu kuppeln, werden die Tragbolzen 22 der Tragkonsolen 21 in die Ausnehmungen 12 der Tragkonsolen 11 eingesetzt und werden die Führungsflächen 14 und 24 aneinander zur Anlage gebracht. Hierauf werden die Tragkonsolen 11 und 21 in ihrer Betriebslage verriegelt.

Die für die Verriegelung vorgesehene Einrichtung besteht aus einem an jeder der Tragkonsolen 21 des Arbeitsgerätes 2 angeordneten Betätigungshebel 31, welcher um einen Bolzen 31a verschwenkbar ist, welcher unter Wirkung einer Stellfeder 32 steht und welcher mit einer Stellplatte 33 ausgebildet ist, welche mit einem Führungsschlitz 33a versehen ist. Weiters ist ein Riegelelement 34 vorgesehen, welches mittels eines Bolzens 35, der in den Führungsschlitz 33a der Stellplatte 33 einragt, mit dieser gekuppelt ist. Das Riegelelement 34 ist weiters mit einem Führungsschlitz 36 ausgebildet, in welchen ein von der Tragkonsole 21 abragender Bolzen 25 einragt. Schließlich ist das Riegelelement 34 mit einem bogenförmig gekrümmten Riegelbolzen 37 ausgebildet, welcher zwischen den an der Tragkonsole 21 vorgesehenen Anschlag 23 und einen diesem zugeordneten, an der Tragkonsole 11 vorgesehenen Anschlag 15 einschiebbar ist.

An der Tragkonsole 21 sind weiters ein um einen Bolzen 38a verschwenkbarer Kipphebel 38 und ein Rastbolzen 39 vorgesehen. Der Kipphebel 38 ist mit einem Anschlagbolzen 41 und mit einem Haken 42 ausgebildet. Weiters ist am Riegelelement 34 eine um eine Achse 40a verschwenkbare Klinke 40 vorgesehen, welche mit einer Ausnehmung 43 ausgebildet ist.

### Die Wirkungsweise dieser Vorrichtung ist wie folgt:

In Fig.2 ist diejenige Betriebslage dargestellt, in welcher die Konsole 21 mittels des Tragbolzens 22 in die Ausnehmung 12 der Konsole 11 eingesetzt ist, weiters die Führungsflächen 14 und 24 aneinander zur Anlage gebracht sind und der Riegelbolzen 37 zwischen die Anschläge 23 und 15 eingeschoben ist, wodurch die Konsole 21 mit der Konsole 11 verriegelt ist. Da der Betätigungshebel 31 unter der Wirkung der Stellfeder 32 steht, welche diesen auf Verschwenkung in Richtung des Uhrzeigersinnes belastet, wird der Riegelbolzen 37 in seiner die Konsolen 11 und 21 verriegelnden Stellung gehalten.

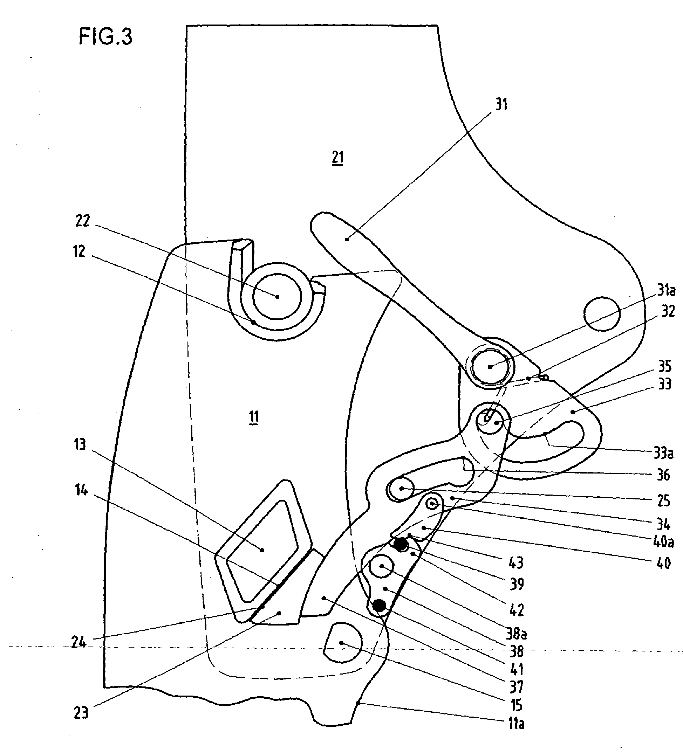

Sobald die Verriegelung gelöst werden soll, wird der Betätigungshebel 31 entgegen dem Uhrzeigersinn verschwenkt. Hierdurch wird das Riegelelement 34 mittels des im Führungsschlitz 33a geführten Bolzens 35 nach oben gezogen, wodurch der Riegelbolzen 37 von den Anschlägen 23 und 15 gelöst wird. Hierdurch gelangt der Riegelbolzen 37 in die in Fig.3 dargestellte Lage. Durch die Verschwenkung des Stellhebels 31 wird weiters die Stellfeder 32 gespannt. Das Riegelelement 34 ist mittels des in den Führungsschlitz 36 einragenden Bolzens 25 geführt.

Bei dieser Entriegelung, welche manuell durchgeführt wird, muss jedoch gewährleistet werden, dass die Spannkraft der Stellfeder 32 erhalten bleibt, da diese Spannkraft für eine später erfolgende Verriegelung der Konsolen 11 und 21, welche automatisch erfolgen soll, benötigt wird. Hierfür sind an der Konsole 21 der mit dem Bolzen 41 und mit dem Haken 42 ausgebildete Kipphebel 38 sowie der Bolzen 39 vorgesehen und ist am Riegelelement 34 die Klinke 40 vorgesehen, deren Wirkungsweisen nachstehend näher erläutert sind:

In der in Fig.2 dargestellten Lage befindet sich die Klinke 40 oberhalb des Kipphebels 38.
In der in Fig.3 dargestellten Lage, welche dadurch erzielt wird, dass der Stellhebel 31 im Gegenuhrzeigersinn verschwenkt worden ist, ist das Riegelelement 34 nach oben gezogen, wodurch der Riegelbolzen 37 vom Anschlag 15 abgehoben ist und ist die Klinke 40 unter Wirkung der Schwerkraft so verschwenkt worden, dass sie sich am Haken 42 des Kipphebels 38 abstützt. Da dabei der Bolzen 41 des Kipphebels 38 an den Rand 11a der Konsole 11 des Traktors 1 anliegt, kann der Kipphebel 38 nicht verschwenkt werden, obgleich er aufgrund der Stellfeder 32 über die Klinke 40 auf dessen Verschwenkung im Uhrzeigersinn belastet wird.

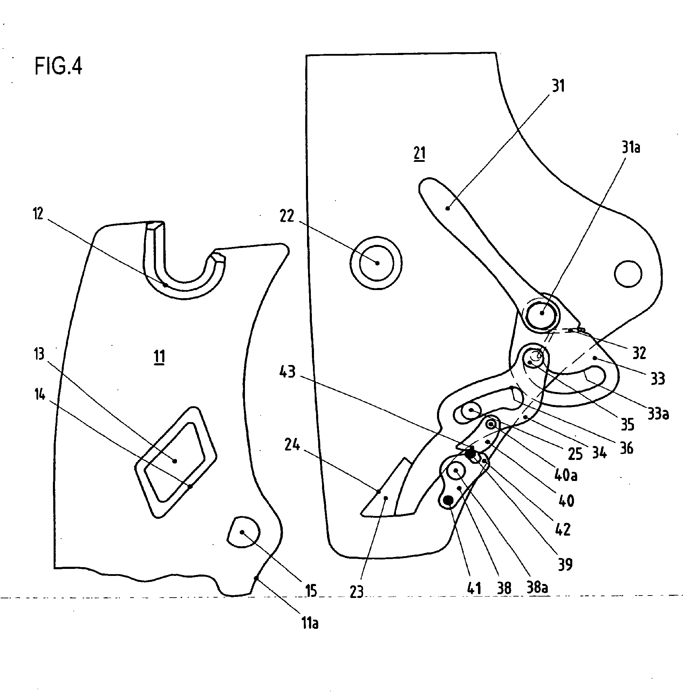

Sobald das Arbeitsgerät 2 vom Traktor 1 abgehoben wird, wodurch der Bolzen 41 vom Rand 11a der Konsole 11 entfernt wird, kann der Kipphebel 38 im Uhrzeigersinn verdreht werden, wodurch die Ausnehmung 43 der Klinke 40 an den Bolzen 39 zur Anlage kommt. Hierdurch wird das Riegelelement 34 entgegen der Wirkung der Stellfeder 32 in seiner zurückgezogenen, nicht verriegelnden Stellung gehalten. Dabei befindet sich der Haken 42 des Kipphebels 38 seitlich der Klinke 40. Diese Lage ist in Fig.4 dargestellt.

Sobald die Konsole 21 des Arbeitsgerätes 2 wieder an die Konsole 11 des Traktors 1 angenähert wird, um das Arbeitsgerät 2 mit dem Traktor 1 zu kuppeln, kommt der Bolzen 41 des Kipphebels 38 an den Rand 11a der Konsole 11 zur Anlage, wodurch der Kipphebel 38 im Gegenuhrzeigersinn verschwenkt wird. Hierdurch verschwenkt er die Klinke 40 im Uhrzeigersinn, wodurch sie vom Bolzen 39 abgehoben wird. Da hierdurch das Riegelelement 34 durch den Bolzen 39 nicht mehr abgestützt ist, kommt die Stellfeder 32 zur Wirkung, durch welche der Betätigungshebel 31 mit der Stellplatte 33 im Uhrzeigersinn verschwenkt wird, wodurch das Riegelelement 34 nach unten verschoben wird. Dadurch wird der Riegelbolzen 37 zwischen die Anschläge 23 und 15 eingeschoben, wodurch die beiden Konsolen 11 und 21 wieder verriegelt sind, wie dies in Fig.2 dargestellt ist.

Somit ist eine Vorrichtung geschaffen, bei welcher eine manuelle Betätigung, nämlich einer Verschwenkung des Stellhebels 31, nur dafür erforderlich ist, um das Arbeitsgerät 2 vom Traktor 1 zu entriegeln, wogegen die Verriegelung des Arbeitsgerätes 2 mit dem Traktor 1 automatisch erfolgt.

## Patentansprüche

1. Tragfahrzeug [1], insbesondere Traktor, mit einem ankuppelbaren Arbeitsgerät [2] und mit einer Vorrichtung zur Kupplung des Arbeitsgerätes, insbesondere einer Ladeschwinge, mit dem Tragfahrzeug [1], wobei das Tragfahrzeug [1] und das Arbeitsgerät [2] mit einander zugeordneten Tragkonsolen [11, 21] ausgebildet sind, welche aneinander zur Anlage bringbar sind und wobei weiters an einer der Tragkonsolen [21] des Arbeitsgerätes [2] ein mittels eines Betätigungshebels [31] verstellbares Riegelelement [34] angeordnet ist, welchem an der entsprechenden Tragkonsole [11] des Tragfahrzeuges [1] mindestens ein Anschlag [15] zugeordnet ist und durch welches die aneinander zur Anlage gebrachten Tragkonsolen [21,11] des Arbeitsgerätes [2] und des Tragfahrzeuges [1] miteinander verriegelbar sind, **dadurch gekennzeichnet, dass** der Betätigungshebel [31] unter Wirkung einer Stellfeder [32] steht, durch welche er auf Verstellung des Riegelelementes [34] in seine das Arbeitsgerät [2] mit dem Tragfahrzeug [1] verriegelnde Stellung belastet wird und dass eine Rasteinrichtung [38 bis 42] vorgesehen ist, durch welche das Riegelelement [34] nach Lösen der Verriegelung entgegen der Wirkung der Stellfeder [32] in seiner entriegelnden Stellung gehalten wird, wobei die Wirkung der Rasteinrichtung [38 bis 42] **dadurch** aufgehoben wird, dass die Tragkonsolen [21,11] des Arbeitsgerätes [2] und des Tragfahrzeuges [1] aneinander zur Anlage gebracht werden.

2. Tragfahrzeug [1] nach Patentanspruch 1, **dadurch gekennzeichnet, dass** die Tragkonsolen [21] des Arbeitsgerätes [2] durch jeweils ein Paar von voneinander im Abstand befindlichen Platten gebildet sind.

3. Tragfahrzeug [1] nach einem der Patentansprüche 1 und 2, **dadurch gekennzeichnet, dass** der Betätigungshebel [31] unter Wirkung einer Stellfeder [32] steht, durch welche er auf Verstellung des Riegelelementes [34] in die verriegelnde Stellung belastet ist.

4. Tragfahrzeug [1] nach einem der Patentansprüche 1 bis 3, **dadurch gekennzeichnet, dass** das Riegelelement [34] längs der Tragkonsole [21] des Arbeitsgerätes [2] verstellbar geführt ist.

5. Tragfahrzeug [1] nach Patentanspruch 4, **dadurch gekennzeichnet, dass** mindestens eine Tragkonsole [21] des Arbeitsgerätes [2] mit einem Bolzen [25] od.dgl. ausgebildet ist, welcher einen im Riegelelement [34] vorgesehenen Führungsschlitz [36] durchsetzt.

6. Tragfahrzeug [1] nach einem der Patentansprüche 1 bis 5, **dadurch gekennzeichnet, dass** der Betätigungshebel [31] mit einer einen Führungsschlitz [33a] aufweisenden Stellplatte [33] ausgebildet ist, in welchem ein am Riegelelement [34] befindlicher Bolzen [35] od.dgl. geführt ist.

7. Tragfahrzeug [1] nach einem der Patentansprüche 1 bis 6, **dadurch gekennzeichnet, dass** die Tragkonsolen [11,21] des Tragfahrzeuges [1] und des Arbeitsgerätes [2] mit Anschlägen [15,23] ausgebildet sind, mit welchem das Riegelelement [34] zusammenwirkt.

8. Tragfahrzeug [1] nach einem der Patentansprüche 1 bis 7, **dadurch gekennzeichnet, dass** am Riegelelement [34] eine verschwenkbare Klinke [40] vorgesehen ist, durch welche das Riegelelement [34] in seiner entriegelnden Stellung gehalten werden kann.

9. Tragfahrzeug [1] nach Patentanspruch 8, **dadurch gekennzeichnet, dass** der Klinke [40] ein an der entsprechenden Tragkonsole [21] des Arbeitsgerätes [2] befindlicher Anschlag, z.B. ein Bolzen [39], zugeordnet ist.

10. Tragfahrzeug [1] nach einem der Patentansprüche 1 bis 9, **dadurch gekennzeichnet, dass** an mindestens einer Tragkonsole [21] des Arbeitsgerätes [2] ein Stellelement [38] vorgesehen ist, welches einerseits mit der Klinke [40] und andererseits mit der entsprechenden Tragkonsole [11] des Tragfahrzeuges [1] zusammenwirkt, wobei es durch die Tragkonsole [11] des Tragfahrzeuges [1] so verstellt wird, dass die Klinke [40] vom Anschlag [39] gelöst wird, wodurch das Riegelelement [34] unter Wirkung der Stellfeder [32] in seine verriegelnde Lage verstellbar ist.

## Claims

1. A carrier vehicle (1), in particular a tractor, having an implement (2) couplable thereto and having a device for coupling the implement, in particular a loader beam, to the carrier vehicle (1), the carrier vehicle (1) and the implement (2) being constructed with mutually associated carrier brackets (11, 21), which may be brought to rest against one another, and a locking element (34) adjustable by means of an actuating lever (31) being additionally arranged on one of the carrier brackets (21) of the implement (2), with which locking element (34) at least one limit stop (15) is associated on the corresponding carrier bracket (11) of the carrier vehicle (1) and by which the carrier brackets (21, 11) of the implement (2) and the carrier vehicle (1) brought to rest against one another may be locked together, **characterised in that** the actuating lever (31) is acted upon by an adjusting spring (32), by which it is loaded on adjustment of the locking element (34) into its position locking the implement (2) to the carrier vehicle (1), and **in that** a catch means (38 to 42) is provided, by which the locking element (34) is held in its unlocking position on release of the lock counter to the action of the adjusting spring (32), wherein the action of the catch means (38 to 42) is cancelled out by bringing the carrier brackets (21, 11) of the implement (2) and of the carrier vehicle (1) to rest against one another.

2. A carrier vehicle (1) according to claim 1, **characterised in that** the carrier brackets (21) of the implement (2) are formed in each case by a pair of mutually spaced plates.

3. A carrier vehicle (1) according to one of claims 1 and 2, **characterised in that** the actuating lever (31) is acted on by an adjusting spring (32), by which it is loaded on adjustment of the locking element (34) into the locking position.

4. A carrier vehicle (1) according to one of claims 1 to 3, **characterised in that** the locking element (34) is guided adjustably along the carrier bracket (21) of the implement (2).

5. A carrier vehicle (1) according to claim 4, **characterised in that** at least one carrier bracket (21) of the implement (2) is constructed with a pin (25) or the like, which passes through a guide slot (36) provided in the locking element (34).

6. A carrier vehicle (1) according to one of claims 1 to 5, **characterised in that** the actuating lever (31) is constructed with an adjusting plate (33) comprising a guide slot (33a), in which a pin (35) or the like located on the locking element (34) is guided.

7. A carrier vehicle (1) according to one of claims 1 to 6, **characterised in that** the carrier brackets (11, 21) of the carrier vehicle (1) and the implement (2) are constructed with limit stops (15, 23), with which the locking element (34) cooperates.

8. A carrier vehicle (1) according to one of claims 1 to 7, **characterised in that** a swivellable latch (40) is provided on the locking element (34), by which latch (40) the locking element (34) may be held in its unlocking position.

9. A carrier vehicle (1) according to claim 8, **characterised in that** a limit stop, e.g. a pin (39), located on the corresponding carrier bracket (21) of the implement (2) is associated with the latch (40).

10. A carrier vehicle (1) according to one of claims 1 to 9, **characterised in that** an adjusting element (38) is provided on at least one carrier bracket (21) of the implement (2), which adjusting element (38) cooperates on the one hand with the latch (40) and on the other hand with the corresponding carrier bracket (11) of the carrier vehicle (1), wherein it is adjusted by the carrier bracket (11) of the carrier vehicle (1) such that the latch (40) is released from the limit stop (39), whereby the locking element (34) is adjustable under the action of the adjusting spring (32) into its locking position.

## Revendications

1. Véhicule porteur (1), en particulier tracteur, pourvu d'un outil de travail (2) apte à être accouplé et d'un dispositif pour accoupler l'outil de travail, en particulier un bras de chargement oscillant, au véhicule porteur (1), étant précisé que le véhicule porteur (1) et l'outil de travail (2) sont pourvus de consoles porteuses (11, 21) qui sont associées l'une à l'autre et qui peuvent être amenées en butée l'une contre l'autre, et qu'il est également prévu sur l'un des consoles porteuses (21) de l'outil de travail (2) un élément de verrouillage (34) qui est apte à être déplacé à l'aide d'un levier d'actionnement (31), auquel est associée sur la console (11) correspondante du véhicule porteur (1) au moins une butée (15) et grâce auquel les consoles porteuses (21, 11) de l'outil (2) et du véhicule (1) amenées en butée l'une contre l'autre peuvent être verrouillées ensemble,
**caractérisé en ce que** le levier d'actionnement (31) est soumis à l'action d'un ressort de positionnement (32) grâce auquel il est contraint pour que l'élément de verrouillage (34) soit amené dans sa position qui verrouille l'outil de travail (2) avec le véhicule porteur (1), et **en ce qu'**il est prévu un dispositif d'enclenchement (38 à 42) grâce auquel l'élément de verrouillage (34), après la suppression du verrouillage à l'encontre de l'action du ressort (32), est maintenu en position de déverrouillage, l'action du dispositif d'enclenchement (38 à 42) étant supprimée grâce au fait que les consoles porteuses (21, 11) de l'outil (2) et du véhicule (1) sont amenées en butée l'une contre l'autre.

2. Véhicule porteur (1) selon la revendication 1, **caractérisé en ce que** les consoles porteuses (21) de l'outil de travail (2) sont formées chacune par une paire de plaques espacées l'une de l'autre.

3. Véhicule porteur (1) selon la revendication 1 ou 2, **caractérisé en ce que** le levier d'actionnement (31) est soumis à l'action d'un ressort de positionnement (32) grâce auquel il est contraint pour amener l'élément de verrouillage (34) en position de verrouillage.

4. Véhicule porteur (1) selon l'une des revendications 1 à 3, **caractérisé en ce que** l'élément de verrouillage (34) est guidé mobile le long de la console porteuse (21) de l'outil de travail (2).

5. Véhicule porteur (1) selon la revendication 4, **caractérisé en ce qu'**au moins une console porteuse (21) de l'outil de travail (2) est pourvue d'une broche (25) ou d'un élément similaire qui traverse une fente de guidage (36) prévue dans l'élément de verrouillage (34).

6. Véhicule porteur (1) selon l'une des revendications 1 à 5, **caractérisé en ce que** le levier d'actionnement (31) est pourvu d'une plaque de positionnement (33) qui présente une fente de guidage (33a) et dans laquelle est guidée une broche (35), ou un élément similaire, située sur l'élément de verrouillage (34).

7. Véhicule porteur (1) selon l'une des revendications 1 à 6, **caractérisé en ce que** les consoles porteuses (11, 21) du véhicule porteur (1) et de l'outil de travail (2) sont pourvues de butées (15, 23) avec lesquelles l'élément de verrouillage (34) coopère.

8. Véhicule porteur (1) selon l'une des revendications 1 à 7, **caractérisé en ce qu'**il est prévu sur l'élément de verrouillage (34) un cliquet pivotant (40) grâce auquel l'élément de verrouillage (34) est maintenu dans sa position déverrouillée.

9. Véhicule porteur (1) selon la revendication 8, **caractérisé en ce qu'**une butée, par exemple une broche (39), située sur la console porteuse correspondante (21) de l'outil de travail (2) est associée au cliquet (40).

10. Véhicule porteur (1) selon l'une des revendications 1 à 9, **caractérisé en ce qu'**il est prévu au moins sur la console porteuse (21) de l'outil de travail (2) un élément de positionnement (38) qui coopère d'une part avec le cliquet (40) et d'autre part avec la console porteuse correspondante (11) du véhicule porteur (1), en étant déplacé par ladite console (11) du véhicule (1) de manière à dégager le cliquet (40) de la butée (39), moyennant quoi l'élément de verrouillage (34) est apte à être amené dans sa position de verrouillage sous l'action du ressort de positionnement (32).
